# EUROPÄISCHE PATENTSCHRIFT

(11) **EP 2 784 476 B1**
(45) Veröffentlichungstag und Bekanntmachung des Hinweises auf die Patenterteilung: **20.07.2016**
(21) Anmeldenummer: 13161231.9
(22) Anmeldetag: 27.03.2013
(51) Int. Cl.: G01N 3/60

(54) **Vorrichtung und Verfahren zur Lagerung von Probenkörpern**
Device and method for storing sample bodies
Dispositif et procédé destinés au stockage de spécimens

(43) Veröffentlichungstag der Anmeldung: 01.10.2014
(73) Patentinhaber: UL LLC, Northbrook, IL 60062 (US)
(72) Erfinder: Sarabi, Bahman Dr., 47800 Krefeld (DE); Meyer, Martin, 42659 Solingen (DE)
(74) Vertreter: Richardt Patentanwälte PartG mbB

(56) Entgegenhaltungen:
- WO-A1-2013/117779
- JP-A- H08 193 932
- JP-A- H11 271 199
- JP-A- 2004 361 123
- US-A- 5 613 776
- US-B1- 6 612 189

## Beschreibung

Die Erfindung betrifft eine Lagerungsvorrichtung zur Lagerung eines Probenkörpers, und eine Temperiervorrichtung.

Thermische Alterung oder Degradation ist die kontinuierliche und irreversible Veränderung des Verhaltens von verschiedenen Materialen bei Einwirkung höherer Temperatur. Wenn verschiedene Materialien erhöhter Temperatur ausgesetzt sind, können diese Materialen viele Arten von physikalischen und/oder chemischen Veränderungen entwickeln. So kann bei verschiedenen Materialien die Aussetzung von erhöhten Temperaturen über längere Zeitperioden progressive Veränderungen der physikalischen Eigenschaften verursachen.

Um nun eine Untersuchung des Verhaltens (oder eine Qualitätskontrolle) von verschiedenen Materialen nach einer temperierten Lagerung der zu prüfenden Materialien (insbesondere von Kunststoff) zu ermöglichen, müssen die Materialien zunächst über einen langen Zeitraum gelagert werden, ohne dass es dabei zu Veränderungen der Symmetrieachse kommt.. Es darf nach der Lagerung keine Abweichung zwischen Symmetrie- und Krafteinleitungsachse geben, da dies die Ergebnisse des Versuchs durch unzulässige Querkräfte verfälschen würde.

Beispielsweise beschreibt DE 37 41 429 A1 eine Vorrichtung zur Werkstoffprüfung, insbesondere zur Messung von Längen- und/oder Breitenänderungen an einer Spann- oder Haltevorrichtung von eingespannten Werkstoffproben. Dazu sind die Proben mit der Längen- und/oder Breitenbestimmung dienenden, durch optische Meßaufnehmer abtastbaren Markierungen versehen. Die Spann- oder Haltevorrichtung ist in einer heiz- und/oder kühlbaren Klimakammer angeordnet mit einem Meßaufnehmer, der mit einem optisch transparenten Fenster versehen ist, das bei Kühlung der Klimakammer bedarfsweise beheizbar ist. Dazu ist die Vorrichtung mit zwei Spannköpfen versehen, die in nicht näher dargestellter Weise an auf Führungssäulen geführten und durch Antriebsspindeln verstellbaren Traversen angeschlossen sein können.

DE 36 05 154 A1 beschreibt eine Materialprüfvorrichtung mit gegenüber einem Gestell bewegbarem Probenhalter, in dem die Probe aufheizbar und abkühlbar ist, wobei Vorsorge getroffen ist, dass bei normalem oder vorzeitigem Versuchsende die Heizeinrichtung und die Bewegungseinrichtung selbsttätig stillgesetzt wird, sowie die Aufheizdehnung und die Abkühlkontraktion des gesamten Versuchsaufbaus innerhalb des Ofens automatisch kompensiert wird. Die Vorrichtung enthält eine Probe im Probenhalter, die mit einem Kolben verbunden ist, und einen den Kolben aufnehmenden Zylinder mit einer Bewegungsdämpfungseinrichtung für den Kolben. Die Vorrichtung enthält ferner ein mit der Probe und dem Probenhalter fest verbundenes Teil, das mit dem Dehnungsmeßaufnehmer in Kontakt steht.

DE 40 21 837 A1 beschreibt eine Vorrichtung zur Zuführung von Proben in eine Messeinrichtung, insbesondere von Proben zur Durchführung von Materialuntersuchungen durch Belastung auf Zug und/oder Druck und/oder Biegung wie Reißfestigkeitsmessungen und dgl. in mit Spannenelementen für die Probe versehen Werkstoffprüfeinrichtungen. Die Messeinrichtung ist so ausgebildet für die Durchführung von Reißfestigkeitsmessungen und eignet sich insbesondere auch zur Verwendung in Klimakammern. Die Proben sind in Probenhaltern gelagert, die so ausgebildet sind, dass die Proben in ihrem Mittelbereich formschlüssig darin aufgenommen werden. Die Probenhalter sind daher besonders für empfindliche, z.B. elastomere Materialen vorgesehen, damit diese Materialen nicht schon vor der eigentlichen Messung verformt werden. Die Proben werden am unteren Ende des Probenhalters mittels eines Paares von Klemmfedern eingespannt.

JP H08 193932 A offenbart eine Vorrichtung zur Detektion der Form eines Probenkörpers mittels einer automatischen Zugprüfmaschine. JP H11 271199 A offenbart ein automatisiertes Material-Test-Gerät. JP 2004 361123 A offenbart eine Material-Test-Maschine, welche Prüfbedingungen drahtlos von IC Tags empfangen und verarbeiten kann. US 6 612 189 B1 offenbart eine Zugprüfmaschine mit einem Walzgerüst, welches in der Lage ist, Prüfkörper mit unterschiedlichem Querschnitt zu erfassen. WO 2013/117779 A1 offenbart ein Werkzeug um Kompressionstests von Materialien, welche aus einem Verbundwerkstoff bestehen, durchzuführen. US 5 613 776 A betrifft einen Temperaturschockeinsatz oder Adapter, welcher es ermöglicht, das thermische Schockverhalten von Probenkörpern zu testen.Der Erfindung liegt demgegenüber die Aufgabe zugrunde, eine verbesserte Lagerungsvorrichtung zur Lagerung eines Probenkörpers und eine Temperiervorrichtung zur Aufnahme der Lagerungsvorrichtung zu erschaffen.

Die der Erfindung zugrunde liegenden Aufgaben werden jeweils mit den Merkmalen der unabhängigen Patentansprüche gelöst. Bevorzugte Ausführungsformen der Erfindung sind in den abhängigen Patentansprüchen angegeben.

Nach Ausführungsformen der Erfindung wird ein System mit einem Probenkörper und einer Lagerungsvorrichtung zur Lagerung des Probenkörpers geschaffen, wobei der auszunehmende Probenkörper einen oberen Teil aufweist und entlang seiner Symmetrieachse einen an den oberen Teil angrenzenden mittleren Teil aufweist, wobei die Lagerungsvorrichtung eine Aussparung aufweist, wobei die Aussparung einen Ober- und einen Unterbereich umfasst, wobei die Aussparung zur Aufnahme des Probenkörpers ausgeformt ist, wobei der aufzunehmende Probenkörper einen oberen Teil, also eine obere Schulter aufweist und entlang seiner Symmetrieachse einen an den oberen Teil angrenzenden mittleren Teil aufweist, wobei die Wände der Aussparung so gebildet sind, dass bei der Aufnahme des Probenkörpers der mittlere Teil des aufzunehmende Probenkörpers senkrecht zur Symmetrieachse zu den Wänden der Aussparung beabstandet ist.

Die Lagervorrichtung weist ferner eine Klemme auf, wobei die Klemme zur kraftschlüssigen Aufnahme des oberen Teils des Probenkörpers ausgebildet ist, wobei die Klemme innerhalb der Erstreckungsebene und senkrecht zur Symmetrieachse des aufzunehmenden Probenkörpers eine erste Breite aufweist, wobei der obere Teil des Probenkörpers innerhalb der Erstreckungsebene und senkrecht zur Symmetrieachse des aufzunehmenden Probenkörpers eine zweite Breite aufweist, wobei die besagte erste Breite größer als die besagte zweite Breite ist, wobei die Wände des Oberbereichs die seitliche Führung für den oberen Teil des aufnehmenden Probenkörpers über die Klemme bilden.

Weiter bilden die Wände des Oberbereichs eine seitliche Führung für die Klemme mit dem aufgenommenen oberen Teil des Probenkörpers, um eine Beweglichkeit des oberen Teils des Probenkörpers entlang der Symmetrieachse des Probenkörpers zu ermöglichen, wobei die seitliche Führung durch ein Anliegen der Wände des Oberbereichs an dem oberen Teil des aufzunehmenden Probenkörpers gegeben ist.

Ausführungsformen der Erfindung könnten den Vorteil haben, dass der Probenkörper in der Lagerungsvorrichtung so gehalten wird, dass die Symmetrieachse keine Veränderung auch nach einer Lagerung bei erhöhter Temperatur erfährt. Es gibt also z.B. keine Abweichung zwischen der Symmetrieachse und der bei einem nachfolgenden Zugexperiment am Probenkörper wirkenden Krafteinleitungsachse. Nichtsdestotrotz ermöglicht die Lagerungsvorrichtung eine Beweglichkeit der oberen Schulter des Probenkörpers entlang der Symmetrieachse des Probenkörpers.

Damit könnte die vorliegende Erfindung den Vorteil haben, dass entlang der Symmetrieachse des Probenkörpers gesehen die Lagerungsvorrichtung eine thermische Ausdehnung des oberen Teils des Probenkörpers entlang der Symmetrieachse ermöglicht. Dies ist möglich, ohne dass der Probenkörper mit seinem mittleren Teil, welcher ja für eine Belastungsmessung besonders relevant ist, an der Wand der Lagerungsvorrichtung ankleben kann oder anhaften kann. Nichtsdestotrotz ist die Lagerungsvorrichtung so ausgebildet, dass der obere Teil des Probenkörpers seitlich gegen ein Sich-Verziehen des Probenkörpers durch die seitliche Führung gesichert ist - der Probenkörper behält also seine Form bei und kann sich bei Ermöglichung einer thermischen Ausdehnung nicht in ungewollter Weise verziehen. Eine seitliche Deformation des Probenkörpers würde sich nachteilig auf die Versuchsergebnisse auswirken, da dann z.B. bei Zugversuch am Probenkörper nicht mehr alle Kräfte parallel zur des Probenkörpers wirken würden. Dies würde zu seitlichen Kräften führen, welche die mechanischen Eigenschaften des Probenkörpers verfälscht darstellen würden.

Nach einer Ausführungsform der Erfindung sind die Wände der Aussparung so gebildet, dass innerhalb der Erstreckungsebene und senkrecht zur Symmetrieachse des aufzunehmenden Probenkörpers die Breite der Aussparung mindestens 1,5 mal so breit wie der mittlere Teil des aufzunehmenden Probenkörpers ist.

Dies könnte den Vorteil haben, dass der mittlere Teil des aufzunehmenden Probenkörpers senkrecht zur Erstreckungsebene des aufzunehmenden Probenkörpers frei von Material der Lagerungsvorrichtung ist. Das bedeutet, dass die Lagerungsvorrichtung in diesem Bereich keinen thermischen Kontakt zum Probenkörper aufweist, und außerdem für den mittleren Teil des aufzunehmenden Probenkörpers eine gleichmäßige Umströmung von Gasen ermöglicht wird, welche bei der temperierten Lagerung des Probenkörpers zur Aufheizung des Probenkörpers verwendet werden.

Nach einer Ausführungsform der Erfindung ist entlang der Symmetrieachse des Probenkörpers gesehen die Größe des Oberbereichs so gewählt, um eine thermische Ausdehnung des oberen Teils des Probenkörpers entlang der Symmetrieachse zu ermöglichen.

Nach einer Ausführungsform der Erfindung weist der Probenkörper entlang der Symmetrieachse eine an den mittleren, parallelen Teil angrenzenden untere Schulter (unterer Teil) auf, wobei die Wände des Unterbereichs eine seitliche Bewegungsbegrenzung für den unteren Teil des Probenkörpers bilden, im Falle dessen der untere Teil des Probenkörpers den Unterbereich berührt.

Dies könnte den Vorteil haben, dass auch einer Verformung des unteren Teils des Probenkörpers verhindert wird.

Nach einer Ausführungsform der Erfindung umfasst die Lagerungsvorrichtung ferner eine Nut, wobei die Nut eine obere Wand, eine untere Wand, und die Wand des Oberbereichs der Aussparung aufweist, wobei die obere und die untere Wand der Nut dazu ausgebildet sind eine senkrecht zur Erstreckungsebene des aufzunehmenden Probenkörpers gesehene Bewegungsbegrenzung für die den oberen Teil des Probenkörpers aufnehmende Klemme zu bilden, im Falle dessen die den oberen Teil des Probenkörpers aufnehmende Klemme die obere Wand oder die untere Wand der Nut berührt, wobei die Nut so ausgebildet ist um die Bewegung des oberen Teils des aufzunehmenden Probenkörpers entlang der Symmetrieachse zu ermöglichen.

Dadurch könnte sich eine Führung für den oberen Teil des Probenkörpers ergeben, welcher zum Einen die thermische Ausdehnung des Probenkörpers entlang seiner Symmetrieachse ermöglicht und zum Anderen den Probenkörper am "herausfallen" aus der Lagerungsvorrichtung hindert. Der Probenkörper kann sich durch diese Führung nur gezielt entlang seiner Symmetrieachse verformen, ein "Verbiegen" in irgend eine andere Richtung ist ausgeschlossen.

Die Verwendung der Klemme könnte den Vorteil haben, dass aufgrund der kraftschlüssigen Aufnahme des Probenkörpers sich der obere Teil des Probenkörpers bei der temperierten Lagerung nicht verziehen kann. Z.B. wird bei Zugversuchen die obere Schulter des Probenkörpers von einer Zugvorrichtung umfasst. Wenn nun die Zugvorrichtung den oberen Teil aufgrund einer Umbiegung senkrecht zur Erstreckungsebene des Probenkörpers nicht sauber fassen kann, könnte dadurch der obere Teil des Probenkörpers in diesem Bereich brechen. Durch die kraftschlüssige Aufnahme des Probenkörpers durch die Klammer wird hingegen jeglicher Verformung des oberen Teils des Probenkörpers bei der Lagerung entgegengewirkt.

Nach einer Ausführungsform der Erfindung bildet die Nut die seitliche Führung für den oberen Teil des aufnehmenden Probenkörpers über die Klemme.

Dies könnte den Vorteil haben, dass der obere Teil des Probenkörpers keinen direkten Kontakt zum Material der Lagerungsvorrichtung hat, und bei der temperierten Lagerung das obere Teil des Probenkörpers nicht schmelzen und sich dadurch irreversibel mit der Lagerungsvorrichtung verbinden kann. Das ermöglicht immer die Beweglichkeit des oberen Teils des Probenkörpers entlang der Symmetrieachse. Der obere Teil des Probenkörpers ist damit immer von der Lagerungsvorrichtung zwangsweise beabstandet.

Nach einer Ausführungsform der Erfindung umfasst die Lagerungsvorrichtung ein erstes Lagerungsvorrichtungsteil und ein zweites Lagerungsvorrichtungsteil, wobei das erste Lagerungsvorrichtungsteil eine erste Aussparung aufweist, wobei das zweite Lagerungsvorrichtungsteil eine zweite Aussparung aufweist, wobei die Aussparung der Lagerungsvorrichtung die erste Aussparung umfasst und die zweite Aussparung umfasst, wobei die erste und die zweite Aussparung so ausgebildet sind, dass der mittlere Teil des aufzunehmenden Probenkörpers senkrecht zur Erstreckungsebene des aufzunehmenden Probenkörpers frei von Material des ersten Lagerungsvorrichtungsteils und des zweiten Lagerungsvorrichtungsteils ist.

Dies könnte den Vorteil haben, dass die gleichmäßige Erhitzung des mittleren Teils des Probenkörpers gewährleistet ist. Die zur Temperierung verwendeten Gase können also den mittleren Teil des Probenkörpers von allen Seiten umströmen und gleichmäßig erhitzen.

Nach einer Ausführungsform der Erfindung bildet das erste Lagerungsvorrichtungsteil die obere Wand der Nut, wobei das zweite Lagerungsvorrichtungsteil die untere Wand der Nut bildet.

Nach einer Ausführungsform der Erfindung sind das erste Lagerungsvorrichtungsteil und das zweite Lagerungsvorrichtungsteil dazu ausgebildet, eine senkrecht zur Erstreckungsebene des aufzunehmenden Probenkörpers senkrechte gerichtete Bewegung für den unteren Teil des aufzunehmenden Probenkörpers zu begrenzen, im Falle dessen der untere Teil des aufzunehmenden Probenkörpers das erste Lagerungsvorrichtungsteil oder das zweite Lagerungsvorrichtungsteil berührt, wobei das erste Lagerungsvorrichtungsteil und das zweite Lagerungsvorrichtungsteil dazu ausgebildet sind, um die Bewegung des unteren Teils des aufzunehmenden Probenkörpers entlang der Symmetrieachse zu ermöglichen.

Dies könnte den Vorteil haben, dass auch der untere Teil des Probenkörpers gegen ein Sich-Verziehen in Richtung senkrecht zur der Richtung und zu der Achse des Probenkörpers gesichert ist. Nichtsdestotrotz wird eine thermische Bewegung des unteren Teils des Probenkörpers ermöglicht.

Nach einer Ausführungsform der Erfindung umfasst die Lagerungsvorrichtung ferner eine Positionierungshilfe für das erste Lagerungsvorrichtungsteil und das zweite Lagerungsvorrichtungsteil, wobei die Positionierungshilfe dazu ausgebildet ist, dass das erste Lagerungsvorrichtungsteil und das zweite Lagerungsvorrichtungsteil so zueinander ausgerichtet werden, dass das erste Lagerungsvorrichtungsteil die obere Wand der Nut bildet, und das zweite Lagerungsvorrichtungsteil die untere Wand der Nut bildet.

Dies könnte den Vorteil haben, dass der Probenkörper in einfacher Form in die Lagerungsvorrichtung eingesetzt werden kann. Hierzu muss der Probenkörper in das erste Lagerungsvorrichtungsteil eingelegt werden und daraufhin mittels der Positionierungshilfe das zweite Lagerungsvorrichtungsteil auf das erste Lagerungsvorrichtungsteil und den Probenkörper aufgebracht werden. Die Teile werden automatisch so zueinander ausgerichtet, dass der Probenkörper nicht "verklemmt" wird und eine Bewegung von Teilen des Probenkörpers entlang der Symmetrieachse des Probenkörpers ermöglicht ist. Gleichzeitig jedoch wird eine Bewegung in die Richtung senkrecht zur Erstreckungsebene des Probenkörpers verhindert.

In einem weiteren Aspekt betrifft die Erfindung ein System mit einer Temperiervorrichtung und einer Lagerungsvorrichtung, wobei die Temperiervorrichtung einen thermischen Hohlraum, z.B. einen Konvektionsofen umfasst, wobei besagter Ofen zur Aufnahme einer Lagerungsvorrichtung, wie oben beschrieben, ausgebildet ist.

Im Weiteren werden Ausführungsformen der Erfindung mit Bezugnahme auf die Zeichnungen näher erläutert. Es zeigen:
**Figur 1** eine Lagerungsvorrichtung zur Lagerung eines Probenkörpers,
**Figur 2** einen Probenkörper und eine Anordnung von Probenkörper und Klemme,
**Figur 3** eine Anordnung eines ersten Lagerungsvorrichtungsteils, eines Probenkörpers und einer Klemme,
**Figur 4** eine Anordnung eines ersten Lagerungsvorrichtungsteils, eines zweiten Lagerungsvorrichtungsteils, eines Probenkörpers und einer Klemme.

Elemente der nachfolgenden Ausführungsformen, die einander entsprechen, sind mit denselben Bezugszeichen gekennzeichnet.

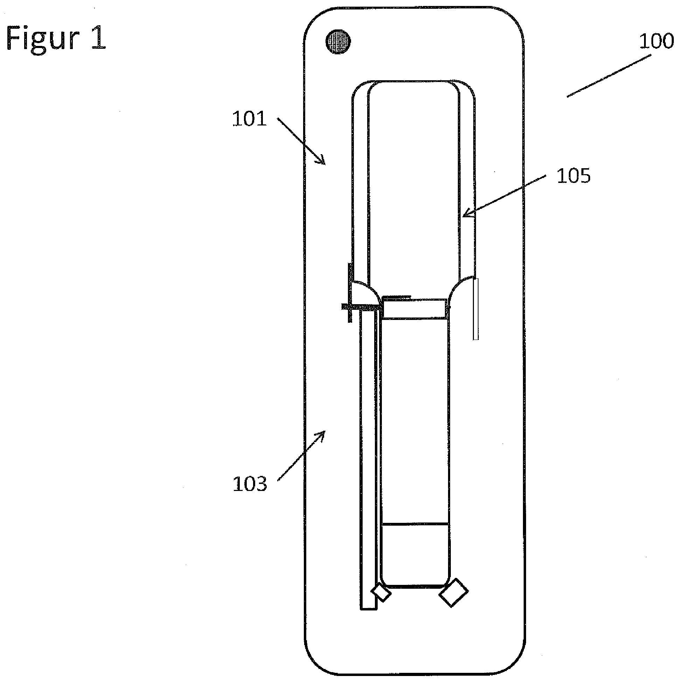

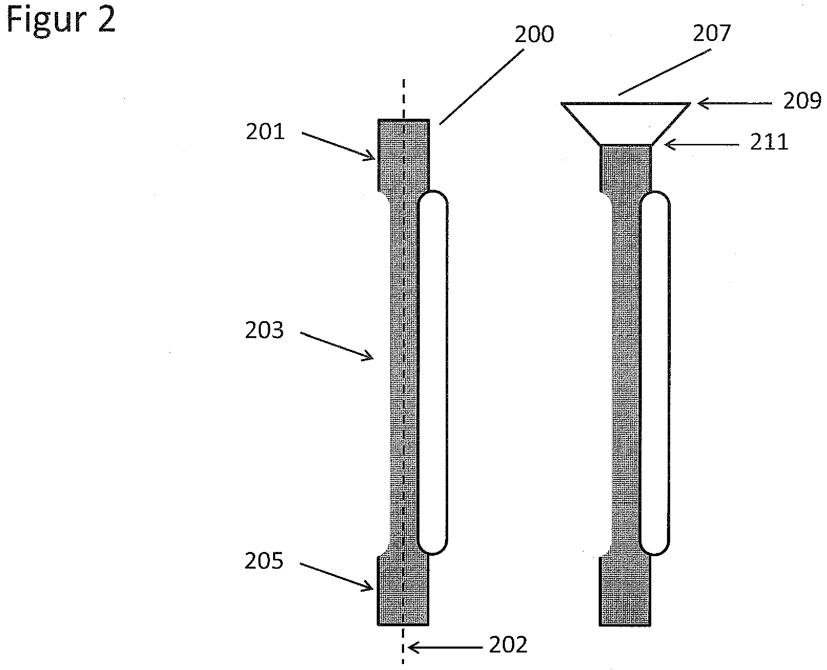

Die **Figur 1** zeigt die Lagerungsvorrichtung (100) zur Lagerung eines Probenkörpers (200) der Figur 2. Die Lagerungsvorrichtung weist eine Aussparung auf, die einen Oberbereich (101) und einen Unterbereich (103) umfasst. Die Wände des Oberbereichs bilden eine seitliche Führung (105) für den oberen Teil eines aufzunehmenden Probenkörpers (201), um eine Beweglichkeit eines oberen Teils des Probenkörpers (200) entlang der Symmetrieachse (202) des Probenkörpers (200) zu ermöglichen.

Die **Figur 2** zeigt den aufzunehmenden Probenkörper (200), der einen oberen Teil (201) aufweist und entlang seiner Symmetrieachse (202) einen an den oberen Teil (201) angrenzenden mittleren Teil (203) aufweist. Ferner weist der Probenkörper (200) entlang der Symmetrieachse (202) einen an den mittleren Teil (203) angrenzenden unteren Teil (205) auf.

Zur Untersuchung der thermischen Alterung des Probenkörpers ist eine temperierte Lagerung in einem Ofen (hier nicht gezeigt) notwendig. Hierzu wird üblicherweise der Probenkörper (200) im lastlosen Zustand bei unterschiedlichen Temperaturen in dem Ofen gelagert. In dem Ofen müssen die Probenkörper über einen langen Zeitraum so gelagert werden, dass sie sich bei der Lagerung nicht verziehen. Ein verzogener Probenkörper könnte nämlich bei nachfolgenden Zugversuchen die Messergebnisse verfälschen, da es hier zu Kraftkomponenten im Probenkörper kommt, welche nicht ausschließlich parallel zur Symmetrieachse(d.h. der Zugachse) des Probenkörpers gerichtet sind.

Die in Figur 1 beschriebene Lagerungsvorrichtung dient nun dem Zweck, eine Lagerung des Probenkörpers der Figur 2 zu ermöglichen, wobei auf der einen Seite ein Sich-Verziehen des Probenkörpers aufgrund eines thermischen Erhitzens im Ofen verhindert wird und auf der anderen Seite der Probenkörper aufgrund des Erhitzens thermisch expandieren kann.

Es sei angemerkt, dass die Form des aufzunehmenden Probenkörpers (200) nicht begrenzt ist durch die Form des Probenkörpers, die in Figur 2 gezeigt ist. Dies gilt analog für die in Figur 1 gezeigte Lagerungsvorrichtung. Die Form der Lagerungsvorrichtung sollte so an die Form des Probenkörpers angepasst sein, um eine thermische Ausdehnung des oberen Teils des Probenkörpers (201) entlang der Symmetrieachse (202) zu ermöglichen. Ferner sollte die Form der Lagerungsvorrichtung so an die Form des Probenkörpers angepasst sein, dass der mittlere Teil (203) des aufzunehmenden Probenkörpers (200) senkrecht zur Erstreckungsebene des aufzunehmenden Probenkörpers (200) frei von Material der Lagerungsvorrichtung ist. Das ermöglicht die gleichmäßige Erhitzung des Probenkörpers bei der thermischen Lagerung.

Ferner zeigt die Figur 2 eine Klemme (207) zur kraftschlüssigen Aufnahme des oberen Teils (201) des Probenkörpers (200). Durch die kraftschlüssige Aufnahme wirkt eine Normal-Kraft auf die miteinander verbundenen Flächen. Durch die kraftschlüssige Aufnahme des Probenkörpers (200) wird verhindert, dass der obere Teil (201) des Probenkörpers sich bei der temperierten Lagerung in dem thermischen Hohlraum nicht biegt.

Ferner weist die Klemme (207) innerhalb der Erstreckungsebene und senkrecht zur Symmetrieachse (202) des aufzunehmenden Probenkörpers (200) eine erste Breite (209) auf. Der obere Teil (201) des Probenkörpers (200) weist innerhalb der Erstreckungsebene und senkrecht zur Symmetrieachse (202) des aufzunehmenden Probenkörpers (200) eine zweite Breite (211) auf. Ferner ist die erste Breite (209) größer als die zweite Breite (211). Deshalb hat der obere Teil (201) des Probenkörpers (200) keinen direkten Kontakt zu Material der Lagerungsvorrichtung und kann daher bei temperierter Lagerung sich nicht irreversibel mit der Lagerungsvorrichtung (100) verbinden. Das gewährleistet immer die Beweglichkeit des oberen Teils des Probenkörpers (200) entlang der Symmetrieachse (202) des Probenkörpers (200).

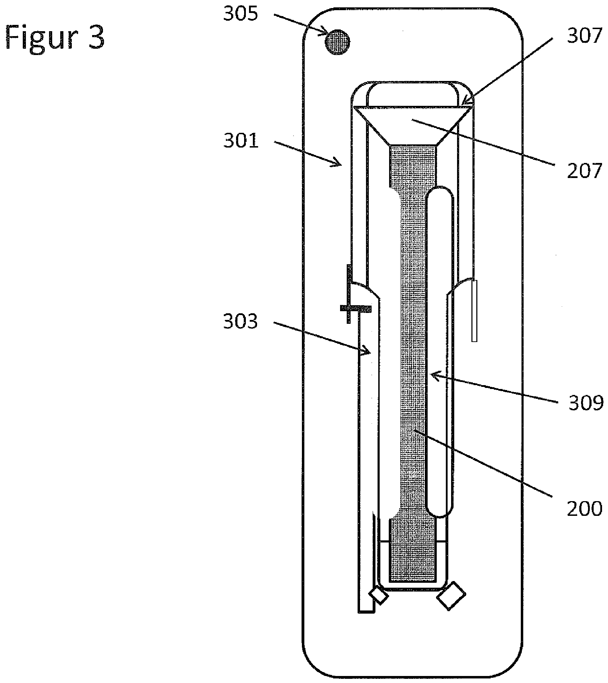

Die **Figur 3** zeigt ein erstes Lagerungsvorrichtungsteil (301), wobei das erste Lagerungsvorrichtungsteil (301) eine erste Aussparung (303) aufweist. Die Wände der ersten Aussparung (303) sind so gebildet, dass innerhalb der Erstreckungsebene und senkrecht zur Symmetrieachse (202) des aufzunehmenden Probenkörpers (200) die Breite der Aussparung (309) mindestens 1,5 mal so breit wie der mittlere Teil des aufzunehmenden Probenkörpers (200) ist.

Die Lagerungsvorrichtung (301) weist in diesem Bereich also keinen thermischen Kontakt zum Probenkörper (200) auf. Deshalb ist die gleichmäßige Umströmung von Gasen ermöglicht, welche bei der temperierten Lagerung des Probenkörpers (200) zur Aufheizung des Probenkörpers (200) verwendet werden.

Ferner zeigt die Figur 3 die Klemme (207), wobei die Wände des Oberbereichs (101) die seitliche Führung (307, 105) für den oberen Teil (201) des aufnehmenden Probenkörpers (200) durch die Klemme (207) bilden.

Ferner zeigt die Figur 3 eine Positionierungshilfe (305) für das erste Lagerungsvorrichtungsteil (301) und das zweite Lagerungsvorrichtungsteil (401).

Die Positionierungshilfe (305) ist so ausgebildet, dass das erste (301) und zweite (401) Lagerungsvorrichtungsteil so zu einander ausgerichtet sind, dass die Probenkörper Bewegung entlang der Symmetrieachse (202) des Probenkörpers (200) ermöglicht ist und gleichzeitig in der Richtung senkrecht zur Erstreckungsebene des Probenkörpers begrenzt ist. Ein Sich-Verziehen des Probenkörpers 200 in diese Richtung senkrecht zur Erstreckungsebene des Probenkörpers wird verhindert.

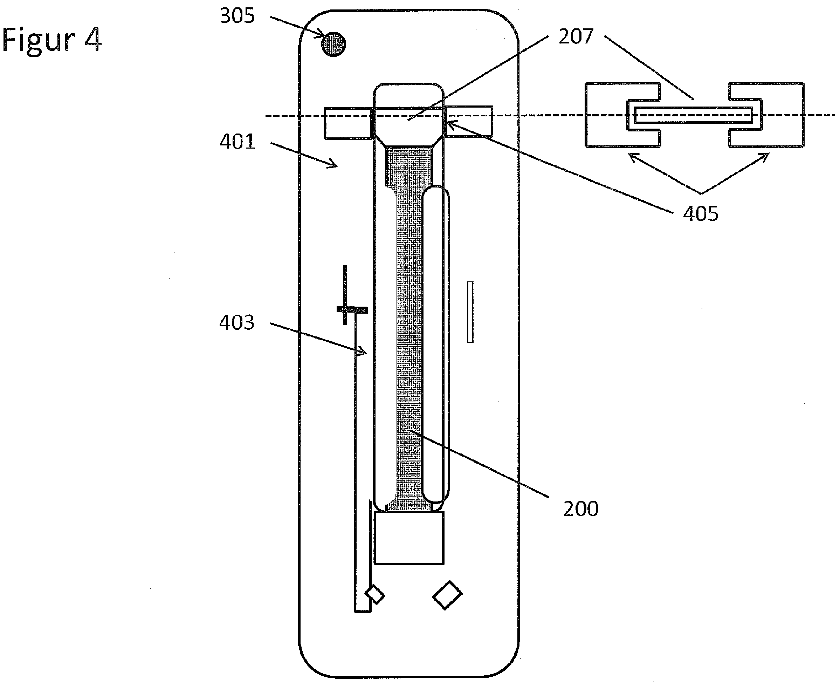

Die **Figur 4** zeigt die Anordnung des ersten Lagerungsvorrichtungsteils (301) der Figur 3, des zweiten Lagerungsvorrichtungsteils (401), des Probenkörpers (200) der Figur 2 und der Klemme (207). Ferner zeigt die Figur 4 die Seitenansicht der Anordnung des ersten Lagerungsvorrichtungsteils (301), des zweiten Lagerungsvorrichtungsteils (401), des Probenkörpers (200) und der Klemme (207).

Ferner zeigt die Figur 4 die Positionierungshilfe (305) für das erste Lagerungsvorrichtungsteil (301) und das zweite Lagerungsvorrichtungsteil (401). Die Positionierungshilfe (305) ist dazu ausgebildet, dass das erste Lagerungsvorrichtungsteil (301) und das zweite Lagerungsvorrichtungsteil (401) so zueinander ausgerichtet werden, dass das erste Lagerungsvorrichtungsteil (301) die obere Wand einer Nut (405) bildet, und das zweite Lagerungsvorrichtungsteil (401) die untere Wand der Nut (405) bildet.

Die obere und die untere Wand der Nut (405) bilden eine senkrecht zur Erstreckungsebene des aufzunehmenden Probenkörpers (200) gesehene Bewegungsbegrenzung für den oberen Teil (201) des aufzunehmenden Probenkörpers (200), im Falle dessen die Klemme (207) die obere Wand oder die untere Wand der Nut (405) berührt. Die Nut (405) dient dazu um die Bewegung des oberen Teils (201) des aufzunehmenden Probenkörpers (200) entlang der Symmetrieachse (202) zu ermöglichen. Die Klemme kann also in der Nut in geführter Weise gleiten. Da vorzugweise die Lagerungsvorrichtung und die Klemme aus Metall sind, kann ein Aneinanderhaften von Klemme und Lagerungsvorrichtung und damit ein Aneinanderhaften des oberen Teils des Probenkörpers und der Lagerungsvorrichtung vermieden werden.

### Bezugszeichenliste

- 100: Lagerungsvorrichtung
- 101: Oberbereich
- 103: Unterbereich
- 105: Seitliche Führung
- 200: Proben körper
- 201: Obere Teil des Probenkörpers
- 202: Symmetrieachse
- 203: Mittlere Teil des Probenkörpers
- 205: Untere Teil des Probenkörpers
- 207: Klemme
- 209: Erste Breite
- 211: Zweite Breite
- 301: Erstes Lagerungsvorrichtungsteil
- 303: Erste Aussparung
- 305: Positionierungshilfe
- 307: Seitliche Führung über die Klemme
- 309: Breite der Aussparung
- 401: Zweites Lagerungsvorrichtungsteil
- 403: Zweite Aussparung
- 405: Nut

## Patentansprüche

1. System mit einem Probenkörper (200) und einer Lagerungsvorrichtung (100) zur Lagerung eines Probenkörpers (200),
- wobei der aufzunehmende Probenkörper (200) einen oberen Teil (201) aufweist und entlang seiner Symmetrieachse (202) einen an den oberen Teil (201) angrenzenden mittleren Teil (203) aufweist,
- wobei die Lagerungsvorrichtung (100) eine Aussparung aufweist,
- wobei die Aussparung einen Ober- (101) und einen Unterbereich (103) umfasst,
- wobei die Aussparung zur Aufnahme des Probenkörpers (200) ausgeformt ist,
- wobei die Wände der Aussparung so gebildet sind, dass bei der Aufnahme des Probenkörpers (200) der mittlere Teil (203) des aufzunehmende Probenkörpers (200) in einer Richtung senkrecht zur Symmetrieachse (202) zu den Wänden der Aussparung beabstandet ist,
- wobei das System weiter eine Klemme (207) aufweist,
- wobei die Klemme (207) zur kraftschlüssigen Aufnahme des oberen Teils (201) des Probenkörpers (200) ausgebildet ist,
- wobei die Klemme (207) innerhalb der Erstreckungsebene und senkrecht zur Symmetrieachse (202) des aufzunehmenden Probenkörpers (200) eine erste Breite (209) aufweist,
- wobei der obere Teil (201) des Probenkörpers (200) innerhalb der Erstreckungsebene und senkrecht zur Symmetrieachse (202) des aufzunehmenden Probenkörpers (200) eine zweite Breite (211) aufweist,
- wobei die besagte erste Breite (209) größer als die besagte zweite Breite (211) ist,
- wobei die Wände des Oberbereichs (101) die seitliche Führung (105) für den oberen Teil (201) des aufnehmenden Probenkörpers (200) über die Klemme (207) bilden
- wobei die Wände des Oberbereichs (101) eine seitliche Führung (105) für die Klemme (207) bilden, um eine Beweglichkeit der Klemme (207) mit dem oberen Teils (201) des Probenkörpers (200) entlang der Symmetrieachse (202) des Probenkörpers (200) zu ermöglichen,
- wobei die seitliche Führung (105) durch ein Anliegen der Wände des Oberbereichs (101) an dem oberen Teil (201) des aufzunehmenden Probenkörpers (200) gegeben ist.

2. System nach Anspruch 1, wobei der Probenkörper (200) innerhalb der Lagervorrichtung (100) angeordnet ist.

3. System nach Anspruch 1 oder 2, wobei die Wände der Aussparung so gebildet sind, dass innerhalb der Erstreckungsebene und senkrecht zur Symmetrieachse (202) des aufzunehmenden Probenkörpers (200) die Breite der Aussparung (309) mindestens 1,5 mal so breit wie der mittlere Teil (203) des aufzunehmenden Probenkörpers (200) ist.

4. System (100) nach einem der vorhergehenden Ansprüche 1-3, wobei entlang der Symmetrieachse (202) des Probenkörpers (200) gesehen die Größe des Oberbereichs (101) so gewählt ist, um eine thermische Ausdehnung des oberen Teils des Probenkörpers (201) entlang der Symmetrieachse (202) zu ermöglichen.

5. System (100) nach einem der vorherigen Ansprüche 1 - 4,
- wobei der Probenkörper (200) entlang der Symmetrieachse (202) einen an den mittleren Teil (203) angrenzenden unteren Teil (205) aufweist,
- wobei die Wände des Unterbereichs (103) eine seitliche Bewegungsbegrenzung für den unteren Teil (205) des Probenkörpers (200) bilden, im Falle dessen der untere Teil (205) des Probenkörpers (200) den Unterbereich (103) berührt.

6. System (100) nach einem der vorherigen Ansprüche 1 - 5, ferner umfassend:
- eine Nut (405), wobei die Nut (405) eine obere Wand, eine untere Wand, und die Wand des Oberbereichs (101) der Aussparung aufweist,
- wobei die obere und die untere Wand der Nut (405) dazu ausgebildet sind eine senkrecht zur Erstreckungsebene des aufzunehmenden Probenkörpers (200) gesehene Bewegungsbegrenzung für die den oberen Teil (201) des Probenkörpers (200) aufnehmende Klemme (207) bilden, im Falle dessen die den oberen Teil (201) des Probenkörpers (200) aufnehmende Klemme (207) die obere Wand oder die untere Wand der Nut (405) berührt,
- wobei die Nut (405) so ausgebildet ist um die Bewegung des oberen Teils (201) des aufzunehmenden Probenkörpers (200) entlang der Symmetrieachse (202) zu ermöglichen.

7. System (100) nach Anspruch 1, wobei die Nut (405) die seitliche Führung (105) für den oberen Teil (201) des aufnehmenden Probenkörpers (200) über die Klemme (207) bildet.

8. System (100) nach einem der vorherigen Ansprüche 1 - 7,
- wobei die Lagerungsvorrichtung (100) ein erstes Lagerungsvorrichtungsteil (301) umfasst und ein zweites Lagerungsvorrichtungsteil (401) umfasst,
- wobei das erste Lagerungsvorrichtungsteil (301) eine erste Aussparung (303) aufweist,
- wobei das zweite Lagerungsvorrichtungsteil (401) eine zweite Aussparung (403) aufweist,
- wobei die Aussparung der Lagerungsvorrichtung (100) die erste Aussparung (303) umfasst und die zweite Aussparung (403) umfasst,
- wobei die erste (303) und die zweite (403) Aussparung so ausgebildet sind, dass der mittlere Teil (203) des aufzunehmenden Probenkörpers (200) senkrecht zur Erstreckungsebene des aufzunehmenden Probenkörpers (200) frei von Material des ersten Lagerungsvorrichtungsteils (301) und des zweiten Lagerungsvorrichtungsteils (401) ist.

9. System (100) nach Anspruch 8,
- wobei das erste Lagerungsvorrichtungsteil (301) die obere Wand der Nut (405) bildet,
- wobei das zweite Lagerungsvorrichtungsteil (401) die untere Wand der Nut (405) bildet.

10. System (100) nach Anspruch 8 oder 9,
- wobei das erste Lagerungsvorrichtungsteil (301) und das zweite Lagerungsvorrichtungsteil (401) dazu ausgebildet sind, eine zur Erstreckungsebene des aufzunehmenden Probenkörpers (200) senkrechte gerichtete Bewegung für den unteren Teil (205) des aufzunehmenden Probenkörpers (200) zu begrenzen, im Falle dessen der untere Teil (205) des aufzunehmenden Probenkörpers (200) das erste Lagerungsvorrichtungsteil (301) oder das zweite Lagerungsvorrichtungsteil (401) berührt,
- wobei das erste Lagerungsvorrichtungsteil (301) und das zweite Lagerungsvorrichtungsteil (401) dazu ausgebildet sind, die Bewegung des unteren Teils (205) des aufzunehmenden Probenkörpers (200) entlang der Symmetrieachse (202) zu ermöglichen.

11. System (100) nach Anspruch 9 oder 10, ferner umfassend:
- eine Positionierungshilfe (305) für das erste Lagerungsvorrichtungsteil (301) und das zweite Lagerungsvorrichtungsteil (401),
- wobei die Positionierungshilfe (305) dazu ausgebildet ist, dass das erste Lagerungsvorrichtungsteil (301) und das zweite Lagerungsvorrichtungsteil (401) so zueinander ausgerichtet werden, dass das erste Lagerungsvorrichtungsteil (301) die obere Wand der Nut (405) bildet, und das zweite Lagerungsvorrichtungsteil (401) die untere Wand der Nut (405) bildet.

12. System mit einer Temperiervorrichtung und einer Lagerungsvorrichtung nach einem der Ansprüche 1-11, wobei die Temperiervorrichtung umfasst:
- einen thermischen Hohlraum,
- wobei besagter thermischer Hohlraum zur Aufnahme der Lagerungsvorrichtung (100) ausgebildet ist.

13. System nach Anspruch 12, wobei die Lagerungsvorrichtung (100) innerhalb des thermischen Hohlraums der Temperiervorrichtung angeordnet ist.

## Claims

1. A system comprising a sample body (200) and a storage device (100) for storing a sample body (200),
- wherein the sample body (200) to be accommodated has an upper part (201) and, along the axis of symmetry (202) thereof, a central part (203) adjoining the upper part (201),
- wherein the storage device (100) has a recess,
- wherein the recess comprises an upper region (101) and a lower region (103),
- wherein the recess is shaped to accommodate the sample body (200),
- wherein the walls of the recess are formed such that, when the sample body (200) is accommodated, the central part (203) of the sample body (200) to be accommodated is distanced from the walls of the recess in a direction perpendicular to the axis of symmetry (202),
- wherein the system also has a clamp (207),
- wherein the clamp (207) is configured to accommodate the upper part (201) of the sample body (200) in a frictionally engaged manner,
- wherein the clamp (207) has a first width (209) within the plane of extension and perpendicularly to the axis of symmetry (202) of the sample body (200) to be accommodated,
- wherein the upper part (201) of the sample body (200) has a second width (211) within the plane of extension and perpendicularly to the axis of symmetry (202) of the sample body (200) to be accommodated,
- wherein said first width (209) is greater than said second width (211),
- wherein the walls of the upper region (101), above the clamp (207), form the lateral guide (105) for the upper part (201) of the sample body (200) being accommodated,
- wherein the walls of the upper region (101) form a lateral guide (105) for the clamp (207) in order to enable a movability of the clamp (207) with the upper part (201) of the sample body (200) along the axis of symmetry (202) of the sample body (200),
- wherein the lateral guide (105) is provided by the walls of the upper region (101) resting on the upper part (201) of the sample body (200) to be accommodated.

2. The system according to claim 1, wherein the sample body (200) is arranged within the storage device (100).

3. The system according to claim 1 or 2, wherein the walls of the recess are formed such that, within the plane of extension and perpendicularly to the axis of symmetry (202) of the sample body (200) to be accommodated, the width of the recess (309) is at least 1.5 times as wide as the central part (203) of the sample body (200) to be accommodated.

4. The system (100) according to any one of pre-ceding claims 1-3, wherein, as considered along the axis of symmetry (202) of the sample body (200), the size of the upper region (101) is selected in order to enable a thermal expansion of the upper part of the sample body (201) along the axis of symmetry (202).

5. The system (100) according to any one of the preceding claims 1-4,
- wherein the sample body (200), along the axis of symmetry (202), has a lower part (205) adjoining the central part (203),
- wherein the walls of the lower region (103) form a delimitation of the lateral movement of the lower part (205) of the sample body (200), in which case the lower part (205) of the sample body (200) contacts the lower region (103).

6. The system (100) according to any one of the preceding claims 1-5, further comprising:
- a groove (405), wherein the groove (405) has an upper wall, a lower wall, and the wall of the upper region (101) of the recess,
- wherein the upper and the lower wall of the groove (405) are configured to form a delimitation for the movement of the clamp (207) accommodating the upper part (201) of the sample body (200), as considered perpendicularly to the plane of extension of the sample body (200) to be accommodated, in which case the clamp (207) accommodating the upper part (201) of the sample body (200) contacts the upper wall or the lower wall of the groove (405),
- wherein the groove (405) is configured to enable the upper part (201) of the sample body (200) to be accommodated to move along the axis of symmetry (202).

7. The system (100) according to claim 1, wherein the groove (405) forms the lateral guide (105), above the clamp (207), for the upper part (201) of the sample body (200) to be accommodated.

8. The system (100) according to anyone of the preceding claims 1-7,
- wherein the storage device (100) comprises a first storage device part (301) and comprises a second storage device part (401),
- wherein the first storage device part (301) has a first recess (303),
- wherein the second storage device part (401) has a second recess (403),
- wherein the recess of the storage device (100) comprises the first recess (303) and comprises the second recess (403),
- wherein the first (303) and the second (403) recesses are configured such that the central part (203) of the sample body (200) to be accommodated, perpendicularly to the plane of extension of the sample body (200) to be accommodated, is free from material of the first storage device part (301) and of the second storage device part (401).

9. The system (100) according to claim 8,
- wherein the first storage device part (301) forms the upper wall of the groove (405),
- wherein the second storage device part (401) forms the lower wall of the groove (405).

10. The system (100) according to claim 8 or 9,
- wherein the first storage device part (301) and the second storage device part (401) are configured to delimit a movement of the lower part (205) of the sample body (200) to be accommodated, directed perpendicularly to the plane of extension of the sample body (200) to be accommodated, in which case the lower part (205) of the sample body (200) to be accommodated contacts the first storage device part (301) or the second storage device part (401),
- wherein the first storage device part (301) and the second storage device part (401) are configured to enable the lower part (205) of the sample body (200) to be accommodated to move along the axis of symmetry (202).

11. The system (100) according to claim 9 or 10, further comprising:
- a positioning aid (305) the first storage device part (301) and the second storage device part (401),
- wherein the positioning aid (305) is configured to orientate the first storage device part (301) and the second storage device part (401) relative to one another such that the first storage device part (301) forms the upper wall of the groove (405) and the second storage device part (401) forms the lower wall of the groove (405).

12. A system comprising a temperature-control device and a storage device according to any one of claims 1-11, wherein the temperature-control device comprises:
- a thermal cavity,
- wherein said thermal cavity is configured to accommodate the storage device (100).

13. The system according to claim 12, wherein the storage device (100) is arranged within the thermal cavity of the temperature-control device.

## Revendications

1. Système avec un spécimen (200) et un dispositif de stockage (100) pour le stockage d'un spécimen (200),
- où le spécimen (200) devant être recueilli présente une partie supérieure (201) et présente une partie centrale (203) limitrophe de la partie supérieure (201) le long de son axe de symétrie (202) ;
- où le dispositif de stockage (100) présente une ouverture,
- où l'ouverture comprend une région supérieure (101) et une région inférieure (103),
- où l'ouverture est formée pour l'admission d'un spécimen (200),
- où les parois de l'ouverture sont conçues de telle sorte que, lors de l'admission du spécimen (200), la partie centrale (203) du spécimen (200) devant être recueilli est espacée par rapport aux parois de l'ouverture dans une direction perpendiculaire à l'axe de symétrie (202),
- où le système présente en outre une attache (207),
- où l'attache (207) est conçue pour la réception par complémentarité des matières de la partie supérieure (201) du spécimen (200),
- où l'attache (207) présente une première largeur (209) dans le plan de dilatation et perpendiculairement par rapport à l'axe de symétrie (202) du spécimen (200) devant être recueilli,
- où la partie supérieure (201) du spécimen (200) présente une deuxième largeur (211) dans le plan de dilatation et perpendiculairement par rapport à l'axe de symétrie (202) du spécimen (200) devant être recueilli,
- où ladite première largeur (209) est supérieure à ladite deuxième largeur (211),
- où les parois de la région supérieure (101) forment le guide latéral (105) pour la partie supérieure (201) du spécimen (200) devant être recueilli par l'attache (207),
- où les parois de la région supérieure (101) forment un guide latéral (105) pour l'attache (207), afin de permettre un déplacement de l'attache (207) avec la partie supérieure (201) du spécimen(200) le long de l'axe de symétrie (202) du spécimen (200),
- où le guide latéral (105) est donné par un appui des parois de la région supérieure (101) sur la région supérieure (201) du spécimen (200) devant être recueilli.

2. Système selon la revendication 1, où le spécimen (200) est disposé à l'intérieur du dispositif de stockage (100).

3. Système selon la revendication 1, ou 2, où les parois de l'ouverture sont formées de telle façon que la largeur de l'ouverture (309) dans le plan de dilatation et perpendiculairement par rapport à l'axe de symétrie (202) du spécimen (200) devant être recueilli est au moins 1,5 fois aussi large que la partie centrale (203) du spécimen (200) devant être recueilli.

4. Système (100) selon l'une des revendications précédentes 1 à 3, où, vu le long de l'axe de symétrie (202) du spécimen (200), la taille de la région supérieure (101) est choisie de sorte à permettre une dilatation thermique de la partie supérieure du spécimen (201) le long de l'axe de symétrie (202).

5. Système (100) selon l'une des revendications précédentes 1 à 4,
- où le spécimen (200) présente une partie inférieure (205) limitrophe de la partie centrale (203) le long de l'axe de symétrie (202),
- où les parois de la région inférieure (103) forment une limite de déplacement latérale pour la partie inférieure (205) du spécimen (200), dans le cas où la partie inférieure (205) du spécimen (200) toucherait la région inférieure(103).

6. Système (100) selon l'une des revendications précédentes 1 à 5, comprenant en outre :
- une rainure (405), où la rainure (405) présente une paroi supérieure, une paroi inférieure et la paroi de la région supérieure (101) présente une ouverture,
- où les parois supérieure et inférieure de la rainure (405) sont conçues de manière à former une limitation du déplacement, vue perpendiculairement par rapport au plan de dilatation du spécimen (200) devant être recueilli, pour l'attache (207) recueillant la partie supérieure (201) du spécimen (200), dans le cas où l'attache (207) recueillant la partie supérieure (201) du spécimen (200) toucherait la paroi supérieure ou la paroi inférieure de la rainure (405),
- où la rainure (405) est conçue de sorte à permettre le déplacement de la partie supérieure (201) du spécimen (200) devant être recueilli le long de l'axe de symétrie (202).

7. Système (100) selon la revendication 1, où la rainure (405) forme le guide latéral (105) pour la partie supérieure (201) du spécimen (200) devant être recueilli par l'attache (207).

8. Système (100) selon l'une des revendications précédentes 1 à 7,
- où le dispositif de stockage (100) comprend une première partie de dispositif de stockage (301) et comprend une deuxième partie de dispositif de stockage (401),
- où la première partie de dispositif de stockage (301) présente une première ouverture (303),
- où la deuxième partie de dispositif de stockage (401) présente une deuxième ouverture (403),
- où l'ouverture du dispositif de stockage (100) comprend une première ouverture (303) et comprend une deuxième ouverture (403),
- où les première (303) et deuxième (403) ouvertures sont conçues de manière que la partie centrale (203) du spécimen (200) devant être recueilli, perpendiculairement par rapport au plan de dilatation du spécimen (200) devant être recueilli, est exempte de matériau de la première partie de dispositif de stockage (301) et de la deuxième partie de dispositif de stockage (401).

9. Système selon la revendication 8,
- où la première partie de dispositif de stockage (301) forme la paroi supérieure de la rainure (405),
- où la deuxième partie de dispositif de stockage (401) forme la paroi inférieure de la rainure (405).

10. Système (100) selon la revendication 8, ou 9,
- où la première partie de dispositif de stockage (301) et la deuxième partie de dispositif de stockage (401) sont conçues pour délimiter un mouvement orienté perpendiculairement par rapport au plan de dilatation du spécimen (200) devant être recueilli pour la partie inférieure (205) du spécimen (200) devant être recueilli dans le cas où la partie inférieure (205) du spécimen (200) devant être recueilli touche la première partie de dispositif de stockage (301) ou la deuxième partie de dispositif de stockage (401),
- où la première partie de dispositif de stockage (301) et la deuxième partie de dispositif de stockage (401) sont conçues pour permettre le mouvement de la partie inférieure (205) du spécimen (200) devant être recueilli le long d'un axe de symétrie (202).

11. Système (100) selon la revendication 9, ou 10, comprenant en outre :
- une aide au positionnement (305) pour la première partie de dispositif de stockage (301) et la deuxième partie de dispositif de stockage (401),
- où l'aide au positionnement (305) est conçue pour que la première partie de dispositif de stockage (301) et la deuxième partie de dispositif de stockage (401) sont orientés l'une par rapport à l'autre de sorte que la première partie de dispositif de stockage (301) forme la paroi supérieure de la rainure (405), et la deuxième partie de dispositif de stockage (401) forme la paroi inférieure de la rainure (405).

12. Système avec un dispositif de mise en température et un dispositif de stockage selon l'une des revendications 1 à 11, où le dispositif de mise en température comprend :
- un espace creux thermique,
- où ledit espace creux thermique est conçu pour l'admission d'un dispositif de stockage (100).

13. Système selon la revendication 12, où le dispositif de stockage (100) est disposé à l'intérieur de l'espace creux thermique du dispositif de mise en température.
